# EUROPÄISCHE PATENTANMELDUNG

(11) **EP 3 726 545 A1**
(43) Veröffentlichungstag der Anmeldung: **21.10.2020**
(21) Anmeldenummer: 19169494.2
(22) Anmeldetag: 16.04.2019
(51) Int. Cl.: H01F 6/04, F17C 3/08, F17C 13/08, F25D 19/00, B32B 1/08, B32B 27/08, F16L 9/16

(54) **BADKRYOSTAT FÜR EINE SUPRALEITENDE EINRICHTUNG MIT VERRINGERTER KONVEKTION**

(71) Anmelder: Siemens Aktiengesellschaft, 80333 München (DE)
(72) Erfinder: Bauer, Anne, 90768 Fürth (DE); Kummeth, Peter, 91074 Herzogenaurach (DE)

(57) **Zusammenfassung**

Es wird ein Badkryostat (1), insbesondere zur Kühlung einer supraleitenden Einrichtung (3) angegeben, mit einer thermisch isolierenden Kryostatwand (5), einen Innenraum (7) zur Befüllung mit einem kryogenen Kühlmittel (9),
- wenigstens einen im Bereich der Kryostatwand (5) angeordneten Kaltkopf (11) zur Kühlung des Innenraums (7) des Badkryostaten (1)
- sowie ein thermisch isolierendes, längliches Hüllrohr (13), welches den Kaltkopf (11) im Innenraum (7) des Badkryostaten (1) im Bereich eines ersten Rohrendes (13a) ringförmig umgibt,
- wobei das Hüllrohr (13) eine in radialer Richtung (5) gasdichte Rohrwand (15) aufweist.

Weiterhin wird ein Hüllrohr (13) für einen solchen Badkryostaten (1) sowie ein Verfahren zur Herstellung eines solchen Hüllrohrs (13) angegeben.

## Beschreibung

Die vorliegende Erfindung betrifft einen Badkryostaten für eine supraleitende Einrichtung, umfassend eine Kryostatwand, einen Innenraum zur Befüllung mit einem kryogenen Kühlmittel und wenigstens einen im Bereich der Kryostatwand angeordneten Kaltkopf zur Kühlung des Innenraums des Badkryostaten. Weiterhin betrifft die Erfindung ein Hüllrohr für einen solchen Badkryostaten sowie ein Herstellungsverfahren für ein solches Hüllrohr.

Aus dem Stand der Technik sind zahlreiche Vorrichtungen aus dem Bereich der Supraleitungstechnik bekannt, bei denen supraleitende Einrichtungen zur Kühlung auf eine kryogene Betriebstemperatur im Innenraum eines Badkryostaten angeordnet sind. Bei solchen supraleitenden Einrichtungen kann es sich beispielsweise um supraleitende Spuleneinrichtungen, insbesondere supraleitende Strombegrenzer oder auch supraleitende Magnetspulen handeln. Bei der beschriebenen Anordnung innerhalb eines Badkryostaten sind diese supraleitenden Einrichtungen typischerweise in ein verflüssigtes kryogenes Kühlmittel eingetaucht. Hierdurch können die supraleitenden Bestandteile der Einrichtung insbesondere auch in direkten Kontakt mit dem flüssigen Kühlmittel treten und sehr effizient durch dieses gekühlt werden. Bei einer derartigen Badkühlung einer supraleitenden Einrichtung nimmt das flüssige Kühlmittel Wärme von dem zu kühlenden Element auf. Hierdurch kommt es innerhalb des Badkryostaten zu einer Verdampfung von einem Teil des flüssigen Kühlmittels, sodass sich oberhalb des Kühlmittelpegels ein mit gasförmigem Kühlmittel gefüllter Gasraum ausbildet. Um das auf diese Weise verdampfte Kühlmittel zurück zu kühlen und insbesondere wieder zu kondensieren, ist typischerweise im Bereich einer Kryostatwand ein Kaltkopf angeordnet, welcher mit weiter außenliegenden Teilen einer Kältemaschine verbunden sein kann. Dieser Kaltkopf dient also zur Rekondensation und zur Kühlung von verdampftem Kühlmittel. Häufig ist der Kaltkopf dabei der kälteste Bereich innerhalb des Badkryostaten. Die wärmeren Bereiche innerhalb des Badkryostaten sind dagegen durch die Kryostatwände und insbesondere durch den Kryostatdeckel sowie im Bereich von Durchführungen und Dichtungen gegeben.

Problematisch bei solchen bekannten Badkryostaten ist, dass es durch die oben beschriebenen Temperaturunterschiede zwischen verschiedenen Teilen der Vorrichtung innerhalb des Gasraums zu einer großräumigen Konvektion kommen kann. Dabei steigt warmes Gas auf und kühles Gas sinkt ab. Wenn für diese Art der Konvektion ein großes Volumen zur Verfügung steht, können vergleichsweise großräumige konvektive Gasströmungen entstehen. Wenn eine solche Gasströmung warme Kryostatwände und insbesondere größere Bereiche eines warmen Kryostatdeckels erreicht, so kann dies zu relativ großen thermischen Verlusten führen. Dies bedeutet, dass durch die Konvektionsströmung ein höherer Wärmeeintrag durch die Kryostatwände erfolgt, als dies ohne eine solche Konvektion der Fall wäre. Ohne die Konvektionsströmung würde sich eine stabile Temperaturschichtung im Gasvolumen über dem Flüssigkeitspegel einstellen, wobei kälteres Gas aufgrund seiner höheren Dichte unterhalb des wärmeren Gases zu liegen käme. Die Tendenz zur Ausbildung von Konvektionsströmungen stört aber häufig die Ausbildung einer solchen erwünschten stabilen Schichtung.

Aufgabe der Erfindung ist es daher, einen Badkryostaten anzugeben, welcher die genannten Nachteile überwindet. Insbesondere soll ein Badkryostat zur Verfügung gestellt werden, bei welchem die thermischen Verluste durch Konvektion im Gasraum des Badkryostaten effektiv reduziert sind. Gleichzeitig soll dabei die Möglichkeit zur Rückkühlung des verdampften Kühlmittels möglichst wenig eingeschränkt werden. Außerdem soll die Reduzierung der Konvektion auf apparativ möglichst einfache Weise erreicht werden. Eine weitere Aufgabe der Erfindung ist es, ein Hüllrohr zur Reduzierung von Konvektion in einem Badkryostaten anzugeben und zusätzlich ein Verfahren zur Herstellung eines solchen Hüllrohrs anzugeben.

Diese Aufgaben werden durch den in Anspruch 1 beschriebenen Badkryostaten, das in Anspruch 14 beschriebene Hüllrohr und das in Anspruch 15 beschriebene Verfahren gelöst.

Der erfindungsgemäße Badkryostat ist insbesondere zur Kühlung einer supraleitenden Einrichtung vorgesehen. Er umfasst eine thermisch isolierende Kryostatwand, einen Innenraum zur Befüllung mit einem kryogenen Kühlmittel und wenigstens einen im Bereich der Kryostatwand angeordneten Kaltkopf zur Kühlung des Innenraums des Badkryostaten. Die Vorrichtung umfasst weiterhin ein thermisch isolierendes, längliches Hüllrohr, welches den Kaltkopf im Innenraum des Badkryostaten im Bereich eines ersten Rohrendes ringförmig umgibt, wobei das Hüllrohr eine in radialer Richtung gasdichte Rohrwand aufweist.

Die thermisch isolierenden Eigenschaften der Kryostatwand sollen dabei insbesondere soweit ausgeprägt sein, dass im Innenraum des Kryostaten eine kryogene Temperatur aufrechterhalten werden kann, während die äußere Umgebung des Badkryostaten beispielsweise im Bereich der Raumtemperatur liegt. Unter einer kryogenen Temperatur soll dabei insbesondere eine Temperatur verstanden werden, welche im Bereich des Siedepunkts von flüssigem Stickstoff oder darunter liegt. Ein derartiger Badkryostat eignet sich insbesondere zur Kühlung einer supraleitenden Einrichtung auf eine Betriebstemperatur, welche unterhalb der Sprungtemperatur des verwendeten Supraleitermaterials liegt.

Um das Kühlmedium im Innenraum des Badkryostaten auf eine solche kryogene Temperatur zu kühlen, ist der Kaltkopf vorgesehen. Er kann thermisch und/oder fluidisch mit einer ansonsten im Wesentlichen außerhalb des Badkryostaten angeordneten Kältemaschine verbunden sein. Insbesondere kann der Kaltkopf auch Teil einer solchen externen Kältemaschine sein. Hierzu kann der Kaltkopf beispielsweise durch die Kryostatwand hindurch ragen. Alternativ kann der Kaltkopf vollständig im Innenraum des Badkryostaten enthalten sein mit einem anderen Element gekoppelt sein, welches durch die Kryostatwand hindurchgeführt ist und insbesondere zur Verbindung des Kaltkopfes mit den übrigen Teilen der Kältemaschine vorgesehen ist.

Das beschriebene Hüllrohr soll den Kaltkopf im Bereich eines ersten Rohrendes ringförmig umgeben beziehungsweise umschließen. Das Hüllrohr ist länglich geformt und es kann sich dabei insbesondere um ein gerades längliches Rohr handeln. Insbesondere kann das Hüllrohr senkrecht im Raum ausgerichtet sein, wobei dann das geodätisch obenliegende Rohrende das beschriebene erste Rohrende ausbildet, welches den Kaltkopf umschließt. Das gegenüberliegende und somit geodätisch untenliegende zweite Rohrende kann dann insbesondere ein offenes Rohrende sein. Auf diese Weise wird erreicht, dass der Kaltkopf über seine gesamte Länge durch das Hüllrohr lokal umschlossen wird, dass aber trotzdem durch die Öffnung im Bereich des untenliegenden Rohrendes ein Austausch von insbesondere gasförmigem Kühlmittel mit den übrigen Teilen des Innenraums des Badkryostaten möglich ist. Auf diese Weise kann die Konvektion im Gasraum des Badkryostaten wirksam reduziert werden, wobei der Bereich des Kaltkopfes trotzdem durch das Rohr hindurch mit gasförmigem Kühlmittel angeströmt werden kann und am Kaltkopf kondensierendes Kühlmedium ungehindert in das Bad abtropfen kann.

Das erste Rohrende soll den Kaltkopf zumindest im Innenraum des Badkryostaten ringförmig umgeben. Wenn der Kaltkopf vollständig im Innenraum des Badkryostaten angeordnet ist, dann soll das erste Rohrende insbesondere den gesamten Kaltkopf ringförmig umgeben. Wenn der Kaltkopf allerdings durch die Kryostatwand hindurchgeführt ist, reicht es aus, wenn das erste Rohrende des Hüllrohrs nur den innenliegenden Teil des Kaltkopfes ringförmig umgibt.

Das beschriebene Hüllrohr soll in radialer Richtung gasdicht ausgebildet sein. Die Richtungsbezeichnung "radial" soll sich hier auf das lokale Koordinatensystem des Hüllrohrs beziehen. Auch bei nicht kreissymmetrischen Rohrquerschnitten soll unter der radialen Richtung analog eine Richtung verstanden werden, welche senkrecht zur Längsachse des Rohrs liegt und welche senkrecht zu einer Tangentialebene der Rohrwand liegt. Somit kann das Rohr allgemein auch einen nicht-kreisförmigen Querschnitt aufweisen, beispielsweise einen rechteckförmigen Querschnitt. Mit anderen Worten soll die Rohrwand soweit gasdicht sein, dass zumindest ein direkter Gasfluss senkrecht durch die Rohrwand hindurch unterbunden ist. Für einen solchen direkten Gasfluss zwischen einem Bereich außerhalb des Rohrs und dem Innenraum des Rohrs soll die Rohrwand also eine gasdichte Barriere darstellen. Der Gasfluss zwischen dem außen liegenden Bereich und dem Innenraum des Rohrs muss allerdings nicht vollständig unterbunden sein. Es reicht im Zusammenhang mit der vorliegenden Erfindung aus, wenn der direkte Gasfluss senkrecht durch die Rohrwand unterbunden ist und auf diese Weise die Weglänge für den Gasfluss zumindest wesentlich verlängert ist.

Allgemein weist der erfindungsgemäße Badkryostat den Vorteil einer durch das Hüllrohr deutlich reduzierten Konvektion im Gasraum auf. Dieser Vorteil wird insbesondere auch bei einer materialsparenden Ausgestaltung des Hüllrohrs erreicht. Das Hüllrohr unterteilt nämlich den Gasraum des Badkryostaten in zwei Bereiche: den Innenraum des Hüllrohrs und den außenliegenden Bereich. Insbesondere wird verhindert, dass an den Kryostatwänden erwärmtes Gas zum Kaltkopf strömt und diesen erwärmt. Im Innenraum des Hüllrohrs können auch hier relativ ausgeprägte Konvektionströmungen vorliegen. Durch diese Strömungen kann insbesondere ein wirksamer Austausch von Gas zwischen dem Bereich des Kaltkopfes und dem Bereich direkt oberhalb des Flüssigkeitspegels des verflüssigten Kühlmittels erfolgen. Diese Strömung innerhalb des Rohrs ist nützlich, da sie die Rückkühlung und Rekondensation des beim Betrieb des Badkryostaten verdampften Kühlmittels fördert. Andererseits wird in den Bereichen außerhalb des Hüllrohrs durch die lokale Kapselung eine Konvektion mit relativ hohem Wärmeeintrag auf den äußeren Gasraum beschränkt. Da der Kaltkopf als kältester Teil des Badkryostaten von dem Hüllrohr umgeben ist, liegen außerhalb des Hüllrohrs nur vergleichsweise geringere Temperaturgradienten vor. Die Innenseite der Kryostatwand ist zwar typischerweise wärmer als die Außenseite des Hüllrohres. Diese Temperaturunterschiede sind jedoch nicht so groß wie die Temperaturunterschiede, die beispielsweise zwischen dem Kryostatwand und dem Kaltkopf vorliegen. Daher kann sich bei der beschriebenen Anordnung des Hüllrohrs in den Bereichen außerhalb des Rohrs eine vergleichsweise stabile Schichtung ausbilden, wobei das unten liegende Gas generell kälter ist als das weiter oben liegende Gas. In den Bereichen außerhalb des Hüllrohres können sich optional zusätzlich im Gasraum horizontal angebrachte Platten befinden, die eine Konvektion in diesem Bereich behindern und zur Ausbildung einer Temperaturschichtung beitragen.

Durch die Ausbildung einer solchen stabileren Schichtung und die Reduzierung von Konvektion in den Bereichen außerhalb des Hüllrohrs wird vorteilhaft erreicht, dass die thermischen Verluste des Badkryostaten reduziert sind. Insbesondere wird bei der verringerten Konvektion auch der unerwünschte Eintrag von Wärme durch die Kryostatwand hindurch verringert, da bei geringerem Gasstrom die thermische Ankopplung der Kryostatwand an das Flüssigkeitsvolumen geringer ist. Dies gilt insbesondere für die geodätisch oben liegenden Bereiche der Kryostatwand und ganz besonders für einen obenliegenden Kryostatdeckel (welcher hier allgemein als Teil der Kryostatwand angesehen wird). Durch die beschriebene Verringerung der thermischen Verluste kann auch der Energieverbrauch beim Betrieb des Badkryostaten wirksam reduziert werden.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Badkryostaten, des Hüllrohrs und des Herstellungsverfahrens allgemein vorteilhaft miteinander kombiniert werden.

So kann die Rohrwand des Hüllrohrs allgemein vorteilhaft mehrschichtig ausgebildet sein. Durch einen solchen mehrschichtigen Aufbau kann insbesondere erreicht werden, dass das Rohr vergleichsweise leicht (und damit auch mit geringem Materialeinsatz) ausgebildet sein kann, wobei trotzdem gute thermisch isolierende Eigenschaften der Rohrwand und eine gute Gasdichtigkeit zumindest in radialer Richtung erreicht werden können. Durch den mehrschichtigen Aufbau kann insbesondere auch bei einer niedrigen Wandstärke des Hüllrohrs eine niedrige Wärmeleitfähigkeit in radialer Richtung erreicht werden. Ein weiterer wesentlicher Vorteil liegt darin, dass das Hüllrohr durch den mehrschichtigen Aufbau vergleichsweise leicht als flexibles Rohr ausgestaltet sein kann, wobei trotzdem die Anforderungen an die Gasdichtigkeit und die thermische Isolationswirkung erfüllt sein können. Eine solche flexible Ausgestaltung erleichtert den Einbau des Hüllrohrs in den Badkryostaten. Dieser Einbau kann insbesondere dann auch nachträglich erfolgen, also insbesondere nach Einfügen der zu kühlenden supraleitenden Einrichtung in den Innenraum des Badkryostaten.

Besonders vorteilhaft kann die mehrschichtige Rohrwand durch eine rollenartige Wicklung aus einer Mehrzahl n von radial übereinanderliegenden Windungen einer aufrollbaren Bahn gebildet sein. Mit anderen Worten kann die mehrschichtige Rohrwand durch Aufrollen einer Bahn nach Art einer Teppichrolle gebildet sein. Bei dieser Ausführungsform kann die mehrschichtige Rohrwand auf besonders einfache Weise gebildet werden. Die Anzahl n der übereinanderliegenden Windungen kann dabei vorteilhaft beispielsweise in einem Bereich zwischen 1 und 20 liegen.

Besonders vorteilhaft kann bei dieser Ausführungsvariante die aufrollbare Bahn als Stapel von wenigstens zwei unterschiedlichen Materialschichten gebildet sein. Auf diese Weise kann also bereits innerhalb einer Windung der gebildeten Rolle ein Mehrschichtsystem vorliegen. Diese Ausführungsform ist besonders vorteilhaft, da dann auch die Rohrwand als Ganzes nach dem Aufrollen durch eine regelmäßig wechselnde Abfolge von wenigstens zwei unterschiedlichen Materialien gebildet ist. Hierdurch kann vorteilhaft erreicht werden, dass beispielsweise eine der Schichten im Hinblick auf eine hohe Gasdichtigkeit und/oder mechanische Stabilität des Hüllrohrs ausgewählt werden kann und dass beispielsweise die wenigstens eine andere Schicht im Hinblick auf eine gute thermische Isolationswirkung ausgewählt werden kann.

Besonders vorteilhaft kann ein solcher Stapel wenigstens eine erste Materialschicht aufweisen, welche gasundurchlässig ist. Insbesondere soll diese erste Materialschicht undurchlässig für das verdampfte kryogene Kühlmittel sein. Zumindest soll die erste Materialschicht soweit gasundurchlässig sein, dass eine Konvektion durch die Schicht hindurch wirksam unterbunden wird. Eine vakuumdichte Ausgestaltung ist dagegen nicht unbedingt notwendig. Durch die gasundurchlässige Ausgestaltung der ersten Materialschicht wird auf besonders einfache Weise erreicht, dass nach der Ausbildung einer Rolle mit mehreren Windungen die Rohrwand als Ganzes zumindest in radialer Richtung gasundurchlässig ist. Insbesondere ist es hierfür nicht notwendig, dass auch die zweite Materialschicht gasundurchlässig ausgebildet sein muss. Es ist vielmehr ausreichend, wenn wenigstens eine Schicht in dem Stapel gasundurchlässig ist.

Gemäß einer vorteilhaften Ausführungsform kann die erste Materialschicht einen glasfaserverstärkten Kunststoff (GFK) umfassen. Insbesondere kann die erste Materialschicht als Hauptbestandteil einen glasfaserverstärkten Kunststoff umfassen oder sogar im Wesentlichen aus einem derartigen Material gebildet sein. Ein solcher glasfaserverstärkter Kunststoff weist eine eher niedrige Wärmeleitfähigkeit auf. Trotzdem müsste ein Hüllrohr, welches mit einer einschichtigen Rohrwand aus einem solchen Material gebildet wäre, eine relativ hohe Wandstärke aufweisen, um mit dem Hüllrohr eine gute thermische Isolation zu erreichen. Bei der Ausbildung des beschriebenen Mehrschichtsystems kann die Schichtdicke der ersten Materialschicht mit dem glasfaserverstärkten Kunststoff (und auch ihr entsprechender Anteil an der Gesamtdicke der Rohrwand) wesentlich dünner gewählt sein, da die zusätzliche zweite Materialschicht im Hinblick auf die zu erreichende thermische Isolationswirkung ausgewählt sein kann, sodass sich insgesamt eine bessere thermische Isolation als mit einer einschichtigen Rohrwand ergibt.

Allgemein und unabhängig von der genauen Materialwahl kann die Schichtdicke der ersten Materialschicht beispielsweise unterhalb von 1 mm und insbesondere im Bereich von 0,1 mm bis 0,5 mm liegen. Auch mit einer derart dünnen Schichtdicke kann durch das geschilderte Aufrollen trotzdem eine ausreichend hohe mechanische Stabilität und auch eine ausreichend hohe Gasundurchlässigkeit gewährleistet sein. Bei der genannten ersten Materialschicht kann es sich allgemein insbesondere um die mechanisch stabilste Schicht des gesamten Stapels handeln. Die erste Materialschicht kann also insbesondere dem durch Aufrollen gebildeten Hüllrohr seine mechanische Stabilität verleihen. Die Dicke und die mechanische Festigkeit der ersten Materialschicht können dabei insbesondere so gewählt sein, dass das aus dem Stapel aufgerollte Hüllrohr trotzdem eine gewisse mechanische Flexibilität behält.

Allgemein und unabhängig von der genauen Materialwahl und Dimensionierung der ersten Materialschicht kann der Stapel eine zweite Materialschicht aufweisen, welche vorteilhaft gasdurchlässig ist. Für die beschriebene radiale Gasdichtigkeit der insgesamt ausgebildeten Rohrwand ist es also ausreichend, wenn insbesondere nur die erste Materialschicht gasundurchlässig ausgestaltet ist. Durch die Ausbildung einer mehrschichtigen Rolle wird trotzdem der direkte Gasfluss in radialer Richtung durch die Rohrwand hindurch unterbunden. Wenn die zweite Materialschicht gasdurchlässig ist, verbleibt bei dieser Ausführungsform ein spiralförmiger Pfad, durch den ein Gasstrom durch die aufgewickelte zweite Materialschicht hindurch und somit durch die Rohrwand hindurch erfolgen kann. Im Vergleich zu einem direkten Gasstrom in radialer Richtung (welcher hier unterbunden ist) ist die Weglänge für diesen Gasstrom jedoch wesentlich verlängert, so dass trotzdem die negativen Auswirkungen eines solchen Gasaustauschs äußerst wirksam reduziert sind. Dies betrifft insbesondere die thermischen Verluste, welche aufgrund eines solchen Gasaustauschs auftreten können.

Bei der gasdurchlässigen Ausgestaltung der zweiten Materialschicht kann insbesondere das Schichtsystem der Rohrwand als Ganzes nach außen offen liegend ausgestaltet sein. Dies bewirkt, dass das Innere der Rohrwand insbesondere auch evakuiert werden kann. Bei einer unter Umständen nötigen Evakuierung des Innenraums des Badkryostaten kommt es bei dieser Ausgestaltung nicht zu einem unerwünschten langsamen Ausgasen der Komponenten der mehrschichtigen Rohrwand. Insbesondere kann das mehrschichtige Schichtsystem im Bereich des untenliegenden zweiten Rohrendes offen liegend ausgestaltet sein.

Besonders vorteilhaft kann eine solche gasdurchlässige zweite Materialschicht durch eine Vliesmatte, eine Netzmatte, eine Superisolationsfolie und/oder eine Schaumstoffmatte gegeben sein. Insbesondere kann es sich dabei vorteilhaft um ein Glasvlies, ein Kunststoffnetz oder um einen offenporigen Schaumstoff handeln. Eine derart offenliegende Ausgestaltung der gasdurchlässigen zweiten Materialschicht bewirkt vorteilhaft, dass das Hüllrohr als Ganzes mit relativ geringem Materialeinsatz und somit auch vergleichsweise leicht ausgebildet sein kann. Trotz dieses niedrigen Materialeinsatzes kann die zweite Materialschicht eine relativ gute thermische Isolationswirkung aufweisen, da durch die innere Struktur einer solchen Schicht die Konvektion von Gas innerhalb der Schicht wirksam reduziert ist. Bei den genannten Ausgestaltungsvarianten wird eine solche gute thermische Isolationswirkung insbesondere bei einem vergleichsweise niedrigen Material-Füllgrad erreicht. So kann ein solcher Füllgrad (also insbesondere der Feststoffanteil am Gesamtvolumen der zweiten Materialschicht) allgemein vorteilhaft in einem Bereich zwischen 5 % und 50 % liegen und besonders bevorzugt in einem Bereich zwischen 10% und 20% liegen. Bei einem Füllgrad in diesem Bereich kann mit den genannten Strukturen bei materialsparender Ausgestaltung trotzdem eine gute thermische Isolationswirkung erreicht werden.

Die genannte Superisolations-Folie kann insbesondere ihrerseits wiederum durch ein Mehrschichtsystem aus abwechselnden metallischen Schichten und thermisch isolierenden Schichten gebildet sein. Bei der Verwendung des Badkryostaten für Hochspannungsanwendungen ist es allgemein vorteilhaft, wenn das Hüllrohr insgesamt nur aus elektrisch nichtleitenden Materialien gebildet ist. Für Anwendungen im Mittelspannungsbereich oder Niederspannungsbereich kann diese Anforderung jedoch abgemildert werden, sodass es ausreichend sein kann, wenn nur die erste Materialschicht aus elektrisch nichtleitendem Material gebildet ist. Dann kann es unter Umständen toleriert werden, wenn die zweite Materialschicht metallische Bestandteile, beispielsweise eine Superisolation mit metallischen Anteilen, enthält.

Allgemein vorteilhaft kann das Hüllrohr flexibel ausgestaltet sein. Mit anderen Worten kann das Hüllrohr so ausgestaltet sein das beispielsweise die Längsachse des Rohrs verbogen werden kann und/oder dass das Rohr zusammengedrückt werden kann. Beispielsweise kann durch ein solches Zusammendrücken aus einem Rohr mit kreisförmigem Querschnitt ein Rohr mit ovalem Querschnitt gebildet werden. Die genannten Verformungen können insbesondere reversibel sein, sodass das Rohr beispielsweise nur für den Einbau in den Badkryostaten temporär verformt wird.

Allgemein vorteilhaft kann das Hüllrohr in radialer Richtung eine effektive thermische Leitfähigkeit von höchstens 1 W/m-K aufweisen. Besonders vorteilhaft liegt dieser Wert sogar nur bei 0,5 W/m-K oder weniger. Bei einer einschichtigen Rohrwand entspricht der genannte Wert jeweils der spezifischen Wärmeleitfähigkeit des verwendeten Materials. Bei einer mehrschichtigen Rohrwand wird die effektive thermische Leitfähigkeit (in der Richtung durch die Wand hindurch) dagegen durch das Wechselspiel der aufeinanderfolgenden Schichten beeinflusst.

Allgemein kann bei einer derart guten thermischen Isolationswirkung des Hüllrohrs insbesondere ein entsprechend hoher Temperaturgradient zwischen den Innenraum des Rohrs und den außenliegenden Bereichen aufrechterhalten werden. Hierdurch kann gewährleistet werden, dass trotz eines relativ hohen Gasaustauschs innerhalb des Rohrs eine konvektionsarme, stabile Schichtung des Gases in den Bereichen außerhalb des Rohrs aufrechterhalten werden kann. Eine solche thermische Leitfähigkeit in dem genannten Bereich kann insbesondere durch die beschriebene mehrschichtige Ausgestaltung (und insbesondere durch die Ausbildung einer gewickelten Rolle) auch bei einem vergleichsweise geringen Materialeinsatz und einer entsprechend geringen Dichte des Hüllrohrs erreicht werden. Dies kann bei der beschriebenen Ausgestaltung insbesondere auch bei einer vergleichsweise geringen Wandstärke erreicht werden. So kann die Wandstärke des Hüllrohrs allgemein vorteilhaft in einem Bereich unterhalb von 1 cm und insbesondere in einem Bereich zwischen 0,3 cm und 0,8 cm liegen.

Gemäß einer weiteren allgemein vorteilhaften Ausgestaltung kann das erste Rohrende des Hüllrohrs mittels einer thermisch isolierenden und gasdichten Dichtung (insbesondere einer dichtenden Verklebung) fest mit der Kryostatwand verbunden sein. Insbesondere kann eine solche Dichtung ringförmig umlaufend um den Kaltkopf (oder um eine entsprechende Zuführung bzw. Durchführung für den Kaltkopf) ausgebildet sein. Die thermische Isolation der Dichtung bewirkt, dass das Hüllrohr auf einer im Verhältnis zur Kryostatwand vergleichsweise niedrigeren Temperatur gehalten werden kann. Die gasdichte Ausgestaltung bewirkt, dass auch in dem kritischen Bereich nahe der Kryostatwand ein Austausch von Gas zwischen dem Innenraum des Rohrs und den außenliegenden Bereichen unterbunden werden kann. Ein Gasaustausch in diesem Bereich wäre besonders schädlich, da gerade hier hohe Temperaturgradienten zwischen dem besonders kalten Kaltkopf und den vergleichsweise warmen übrigen Bereichen der Kryostatwand vorliegen. Diese hohen Temperaturgradienten können besonders wirksam eine starke Konvektion fördern, was wiederum zu einer Erhöhung der thermischen Verluste des Badkryostaten beitragen würde. Eine Unterbindung des Gasflusses gerade in diesem Bereich trägt also besonders wirksam zur Reduzierung der thermischen Verluste bei.

Allgemein kann die Kryostatwand des Badkryostaten aus einem Kryostatbehälter und einem Kryostatdeckel zusammengesetzt sein. Dabei kann der Kaltkopf insbesondere im Bereich des Kryostatdeckels angebracht sein. Dieser Deckel kann insbesondere geodätisch obenliegend angeordnet sein. Dies bewirkt vorteilhaft, dass das beim Betrieb des Badkryostaten verdampfte wärmere Gas zunächst nach oben steigen kann und dann in diesem obenliegenden Bereich wirksam durch den Kaltkopf zurückgekühlt werden kann.

Allgemein (aber vor allem auch bei dieser Ausführungsform mit obenliegendem Deckel und Kaltkopf) ist es besonders vorteilhaft, wenn das beschriebene Hüllrohr von der Kryostatwand aus geodätisch senkrecht nach unten hängt. Hierdurch wird ein senkrechter Gasstrom innerhalb des Hüllrohrs ermöglicht, durch welchen der beschriebene erwünschte Gasaustausch zwischen der Umgebung des Kaltkopfes und den zu kühlenden Bereichen stattfinden kann.

Allgemein kann der Badkryostat einen vorgegebenen maximalen Füllpegel für das flüssige kryogene Kühlmittel aufweisen. Bei den Ausführungsformen mit senkrecht nach unten hängendem Hüllrohr ist es dabei besonders vorteilhaft, wenn der Abstand zwischen dem maximalen Füllpegel und dem unten liegenden zweiten Rohrende höchstens 10 cm beträgt. Besonders vorteilhaft kann der genannte Abstand in einem Bereich zwischen 3 cm und 8 cm liegen. Hierdurch wird gewährleistet, dass die Konvektion in einem großen Teil des gesamten Gasvolumens wirksam unterbunden wird und dass trotzdem ein Eintauchen des Hüllrohrs in das verflüssigte Kühlmittel wirksam unterbunden wird. Bei einem solchen Eintauchen des Hüllrohrs in das flüssige Kühlmittel wäre nämlich ein Gasaustausch zwischen den außenliegenden Bereichen und dem Bereich des Kaltkopfes unterbunden. Dies würde aber die Rückkühlung des Gases in den außenliegenden Bereichen übermäßig stark einschränken bzw. verhindern.

Allgemein vorteilhaft kann es sich bei dem Badkryostaten um einen Kryostaten zur Kühlung einer supraleitenden Einrichtung handeln. Als erfindungsgemäß soll daher auch eine Vorrichtung der Supraleitungstechnik mit einem solchen Badkryostaten und einer in seinem Innenraum angeordneten supraleitenden Einrichtung angesehen werden. Bei der supraleitenden Einrichtung kann es sich insbesondere um eine supraleitende Spuleneinrichtung mit wenigstens einer supraleitenden Spule handeln. Alternativ kann es sich aber beispielsweise auch um einen supraleitenden Permanentmagneten handeln. Die supraleitende Spuleneinrichtung kann beispielsweise eine Spuleneinrichtung für einen supraleitenden Strombegrenzer oder auch allgemein eine supraleitende Magnetspule sein. Das zugrunde liegende Material kann insbesondere entweder ein Tieftemperatursupraleiter oder auch ein Hochtemperatursupraleiter sein. Geeignete kryogene Kühlmittel können beispielsweise flüssiger Stickstoff, flüssiger Wasserstoff, flüssiges Helium, flüssiges Neon oder flüssiges Methan sein. Flüssiger Stickstoff ist hierbei zur Kühlung einer hochtemperatursupraleitenden Einrichtung besonders bevorzugt.

Das erfindungsgemäße Hüllrohr dient zur Reduzierung von Konvektion in einem Badkryostaten. Das Hüllrohr ist als thermisch isolierendes, längliches Rohr ausgebildet, welches eine in radialer Richtung gasdichte, mehrschichtige Rohrwand aufweist. Die mehrschichtige Rohrwand ist durch eine rollenartige Wicklung aus einer Mehrzahl n von radial übereinanderliegenden Windungen einer aufrollbaren Bahn gebildet. Diese aufrollbare Bahn ist als Stapel von wenigstens zwei unterschiedlichen Materialschichten gebildet, wobei der Stapel wenigstens eine erste Materialschicht aufweist, welche gasundurchlässig ist, wobei die erste Materialschicht einen glasfaserverstärkten Kunststoff umfasst. Die Vorteile des erfindungsgemäßen Hüllrohrs ergeben sich analog zu den weiter oben beschriebenen Vorteilen des damit ausgestatteten Badkryostaten.

Die beschriebenen vorteilhaften Ausführungsformen des Badkryostaten sollen insbesondere auch als vorteilhafte Ausführungsformen des Hüllrohrs zum Tragen kommen.

Gemäß einer weiteren bevorzugten Ausführungsform des Hüllrohrs ist die Rohrwand sowohl radial außen als auch radial innen durch die gasundurchlässige erste Materialschicht begrenzt. Dies kann insbesondere wiederum eine Materialschicht sein, welche einen glasfaserverstärkten Kunststoff umfasst. Insbesondere dann, wenn die zweite Materialschicht gasdurchlässig ist, ist es ein Vorteil dieser Ausführungsform, dass das Hüllrohr im Bereich seiner Kontaktflächen mit dem umgebenden Gasvolumen jeweils durch eine gasdichte Schicht begrenzt ist. Hierdurch ist insbesondere auch eine größere mechanische Stabilität des Hüllrohrs gegeben. An seinem axialen Ende, also insbesondere dem nach unten hängenden zweiten Rohrende kann das Hüllrohr dagegen offenliegend ausgestaltet sein. Insbesondere wenn die zweite Materialschicht einen geringen Füllgrad aufweist, kann so ein vergleichsweise freier Gasaustausch über das zweite Rohrende zwischen der äußeren Umgebung und den unausgefüllten Bereichen des Mehrschichtsystems stattfinden.

Gemäß einer weiteren vorteilhaften Ausführungsform des Hüllrohrs ist im Bereich der Bahnkante (welche sich insbesondere über die gesamte Rohrlänge erstreckt) jeweils die erste Materialschicht der äußersten Windung mit der ersten Materialschicht der zweitäußersten Windung verklebt. Vorteilhaft ist dies sowohl für die radial innenliegende Bahnkante als auch für die radial außenliegende Bahnkante erfüllt. Eine solche Verklebung kann beispielsweise mit einem Epoxidharz realisiert sein. Die Verklebung kann insbesondere an diesen beiden Stellen über die gesamte Länge des Hüllrohrs ausgebildet sein. Hierdurch kann eine ausreichende mechanische Stabilität des gebildeten Hüllrohrs gewährleistet sein. Insbesondere ist es möglich, dass alle übrigen Windungen des rollenartige aufgewickelten Hüllrohrs dann nicht miteinander verklebt sind. In diesem Fall wird die mechanische Stabilität für den Wicklungsverbund im Bereich der übrigen Windungen beispielsweise nur über eine Fixierung im Bereich des ersten Rohrendes erreicht.

Bei dem Verfahren zur Herstellung des erfindungsgemäßen Hüllrohrs wird das Hüllrohr durch Aufrollen einer aufrollbaren Bahn zu einer rollenartigen Wicklung aus einer Mehrzahl n von radial übereinanderliegenden Windungen der Bahn gebildet. Auch die Vorteile des Verfahrens ergeben sich analog zu den weiter oben beschriebenen Vorteilen des Hüllrohrs und des Badkryostaten. Insbesondere erlaubt das Verfahren eine vergleichsweise einfache Herstellung eines Hüllrohrs, welches die Anforderungen an die Gasdichtigkeit und die thermische Isolationswirkung erfüllt. Insbesondere soll auch ein Verfahren zur Herstellung eines erfindungsgemäßen Badkryostaten bei dem ein derart hergestelltes Hüllrohr in den Innenraum des Badkryostaten eingebaut wird, als erfindungsgemäß angesehen werden. Der Einbau soll dabei derart erfolgen, dass das Hüllrohr im Bereich eines ersten Rohrendes den Kaltkopf zumindest im Bereich innerhalb des Badkryostaten ringförmig umgibt. Dieser Einbau des Hüllrohrs in den Badkryostaten kann insbesondere mit einer Biegung des Hüllrohrs verbunden sein.

Nachfolgend wird die Erfindung anhand einiger bevorzugter Ausführungsbeispiele unter Bezugnahme auf die angehängten Zeichnungen beschrieben, in denen:
- Figur 1: eine schematische Schnittdarstellung eines Badkryostaten nach dem Stand der Technik zeigt,
- Figur 2: eine entsprechende Darstellung eines Badkryostaten nach einem ersten Ausführungsbeispiel der Erfindung zeigt,
- Figur 3: eine Detailansicht des Hüllrohrs der Figur 2 im lokalen Querschnitt zeigt,
- Figur 4: eine schematische perspektivische Ansicht des Hüllrohrs der Figur 3 zeigt und
- Figur 5: eine Detailansicht des Badkryostaten der Figur 2 im Bereich des Kaltkopfes zeigt.

In den Figuren sind gleiche oder funktionsgleiche Elemente mit gleichen Bezugszeichen versehen.

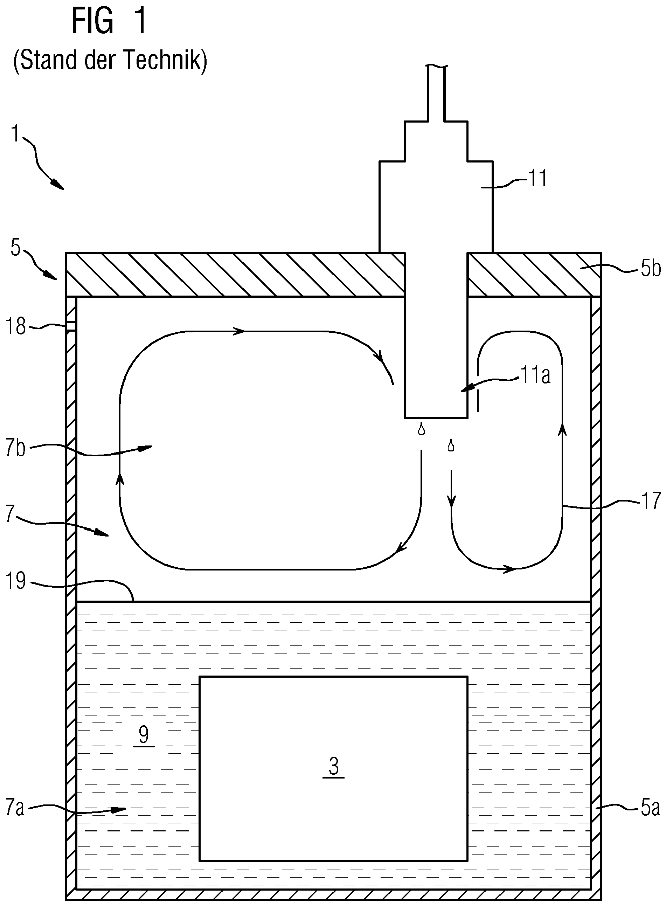

In Figur 1 ist eine schematische Schnittdarstellung eines Badkryostaten 1 nach dem Stand der Technik gezeigt. Der Badkryostat 1 weist eine Kryostatwand 5 auf, welche einen Innenraum 7 des Badkryostaten 1 umschließt. In dem Innenraum 7 ist eine supraleitende Einrichtung 3 angeordnet, die mit dem Badkryostaten auf eine kryogene Betriebstemperatur gekühlt werden kann. Die Kryostatwand 5 begrenzt diesen Innenraum 7 nach außen und isoliert diesen thermisch von der warmen äußeren Umgebung. Um den Badkryostaten 1 befüllen zu können, ist die Kryostatwand 5 aus einem Kryostatbehälter 5a und einem Kryostatdeckel 5b zusammengesetzt. Dabei liegt der Kryostatdeckel 5b geodätisch oben. Der Badkryostat 1 ist mit einem verflüssigten kryogenen Kühlmittel 9 befüllt. Dabei kann es sich beispielsweise um flüssigen Stickstoff handeln. Die supraleitende Einrichtung 3 ist direkt in diese Flüssigkeit eingebettet, so dass sie effektiv gekühlt werden kann. Bei der Kühlung verdampft die Kühlflüssigkeit zum Teil, so dass oberhalb des Flüssigkeitsvolumens 7a auch ein Gasvolumen 7b vorliegt. Der maximale Füllpegel für das verflüssigte Kühlmittel ist hier mit 19 bezeichnet.

Bei dem Badkryostaten nach dem Stand der Technik kommt es im Gasvolumen 7b oberhalb des Flüssigkeitspegels 19 sehr leicht zu ausgeprägten Konvektionsströmungen 17. Diese Konvektionsströmungen werden durch die Temperaturgradienten begünstigt, welche zwischen verschiedenen Bereichen des Badkryostaten vorliegen. So ist beispielsweise das verflüssigte Kühlmittel 9 im Flüssigkeitsvolumen vergleichsweise kalt. Die Kryostatwand 5 ist dagegen aufgrund der wärmeren äußeren Umgebung vergleichsweise warm. Dies gilt insbesondere für den obenliegenden Kryostatdeckel 5b.

Im Bereich des Kryostatdeckels 5b weist der Badkryostat einen Kaltkopf 11 auf. Dieser Kaltkopf ist mit einer hier nicht dargestellten außenliegenden Kältemaschine verbunden. Er dient zur Kühlung des Innenraums 7 des Badkryostaten 1. Der Kaltkopf 11 weist einen Kondensorbereich 11a auf, an dem das gasförmige Kühlmittel rekondensieren kann. Das so verflüssigte Kühlmittel kann von hier aus zurück in das darunterliegende Flüssigkeitsvolumen 7a tropfen. Der Kaltkopf und insbesondere dessen Kondensorbereich 11a bildet also einen besonders kalten Bereich des Badkryostaten aus. Daher kann es also zwischen dem Bereich des Kaltkopfs 11 und den übrigen Bereichen des Kryostatdeckels 5b zu besonders starken Konvektionsströmungen kommen. Hierdurch findet insgesamt ein vergleichsweise hoher Wärmeeintrag durch den Kryostatdeckel (und allgemein die Kryostatwand statt). Es ist also wünschenswert, solche Konvektionsströmungen wirksam zu reduzieren, um die thermischen Verluste und somit den Energieverbrauch des Badkryostaten zu verringern.

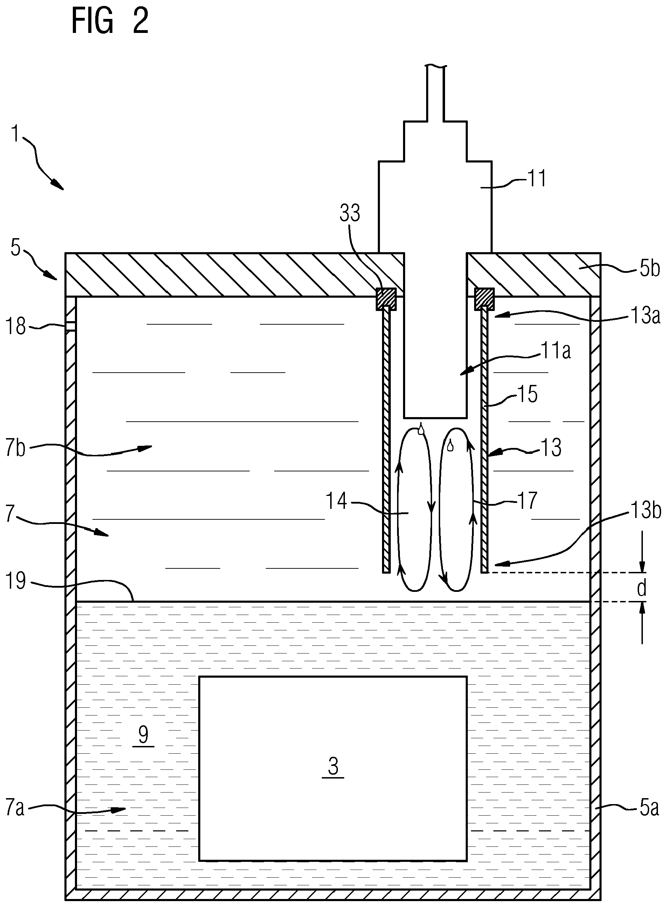

Figur 2 zeigt eine entsprechende Darstellung eines Badkryostaten nach einem ersten Ausführungsbeispiel der Erfindung. Dieser Badkryostat 1 ist insgesamt sehr ähnlich aufgebaut wie der Badkryostat der Figur 1. Zusätzlich zu den bereits beschriebenen Elementen weist der Badkryostat nach dem Ausführungsbeispiel der Figur 2 jedoch ein längliches, thermisch isolierendes Hüllrohr 13 auf, welches mit einem ersten Rohrende 13a an dem Kryostatdeckel 5b angebracht ist und von dort aus senkrecht herunterhängt. Das Hüllrohr 13 umgibt mit seinem ersten Rohrende 13a den Kaltkopf ringförmig. Dabei umgibt es insbesondere den Teil des Kaltkopfes, der durch seine Durchführung durch den Kryostatdeckel 5b in den Innenraum 7 des Badkryostaten hineinragt. Im Bereich des ersten Rohrendes 13a ist das Hüllrohr über eine Dichtung 33 gasdicht mit dem Kryostatdeckel 5b verbunden. Diese Dichtung 33 ist aus einem thermisch schlecht leitfähigen Material gebildet.

Das untenliegende zweite Rohrende 13b des Hüllrohrs 13 ist offen. Dadurch kann das bei der Kühlung der supraleitenden Einrichtung 3 verdampfte Kühlmittel durch den Rohrinnenraum 14 nach oben zum Kaltkopf 11 steigen, dort verflüssigt werden und wiederum durch den Rohrinnenraum 14 zurück nach unten tropfen. Diese wesentliche Funktion des Kaltkopfes 11 wird also durch das senkrecht hängende Hüllrohr 13 nicht behindert. Das zweite Rohrende 13b ist durch einen Abstand d von dem maximalen (also dem höchsten) Füllpegel 19 der Kühlflüssigkeit beabstandet.

Das Hüllrohr 13 unterbindet zumindest einen Teil der in der Figur 1 gezeigten Konvektionsströmungen 17, dadurch dass es das Gasvolumen 7b in den Rohrinnenraum 14 und einen außenliegenden Bereich unterteilt. In dem Rohrinnenraum 14 findet auch weiterhin ein relativ starker Gasaustausch durch Konvektionsströmungen 17 statt. In dem außerhalb liegenden Bereich des Gasraums 7b kann sich durch die thermische Isolierwirkung und die gasdichte Ausgestaltung des Hüllrohrs 13 dagegen eine vergleichsweise stabile Schichtung ausbilden, was durch die dünnen Linien angedeutet ist. Dabei liegen die kälteren Gasschichten aufgrund ihrer höheren Dichte weiter unten, über dem kalten Flüssigkeitsspiegel, und die wärmeren Gasschichten liegen weiter oben, im Bereich des wärmeren Kryostatdeckels 5b. Dadurch, dass auch die Seitenwände der Kryostatwand 5 etwas wärmer sind als der Innenraum 7, ist diese Schichtung nicht vollkommen stabil, und es werden sich trotzdem auch hier kleinere Konvektionsströmungen ausbilden. Durch die Unterbindung des Gasstroms in dem den Kaltkopf direkt umgebenden Bereich wird jedoch ein wesentlicher Pfad für den Gasstrom unterbunden, was die Stärke der Strömungen und die damit verbundenen thermischen Verluste sehr wirksam reduziert.

Der Badkryostat der Figur 2 weist im Bereich seiner Seitenwand (oder alternativ auch im Bereich seines Kryostatdeckels) eine Sicherheitsöffnung auf, die im Normalbetrieb gasdicht geschlossen ist. Die Sicherheitsöffnung ist hier als Überdruckventil 18 ausgestaltet, es kann sich aber beispielsweise auch um eine Berstscheibe handeln. Eine solche Öffnung dient dazu, bei einem Quenchen der supraleitenden Einrichtung (also bei einem plötzlichen Übergang in den normalleitenden Zustand) das dann sehr schnell verdampfende Kühlmittel entweichen zu lassen. Dies verhindert, dass ein zu starker Überdruck entsteht, welcher zu einer Explosion des Badkryostaten führen könnte. Dadurch, dass das Hüllrohr 13 den Kaltkopf 11 nur lokal umgibt und dadurch, dass das außerhalb des Hüllrohrs 13 liegende Gasvolumen nicht weiter in kleinere Kammern unterteilt ist, wird diese Sicherheitsfunktion der Sicherheitsöffnung 18 nicht wesentlich behindert. Es steht nämlich trotzdem ein relativ großes zusammenhängendes Gasvolumen 7b zur Verfügung, aus dem ein ungehindertes Entweichen von verdampftem Kühlmittel nach außen möglich ist.

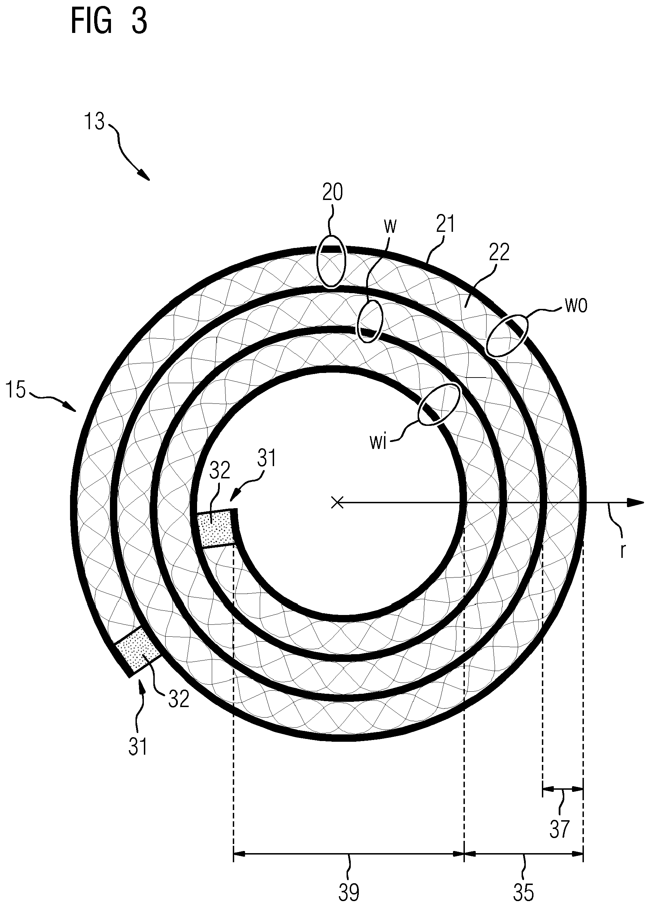

Figur 3 zeigt eine Detailansicht eines Hüllrohrs 13 nach einem Ausführungsbeispiel der Erfindung. Dieses Hüllrohr kann beispielsweise das Hüllrohr 13 aus dem Badkryostaten der Figur 2 darstellen. Dieses Hüllrohr 13 ist durch Aufrollen einer aufrollbaren Bahn 20 gebildet. Diese Bahn 20 soll also hinreichend flexibel sein, so dass sie nach Art einer Teppichrolle aufgerollt werden kann. Die gebildete Rolle weist eine Mehrzahl von übereinanderliegenden Windungen w auf. Die in Figur 3 gezeigten 3 Windungen können dabei beispielhaft auch für eine größere (oder auch kleinere) Anzahl von Windungen stehen. Durch das Aufrollen in mehreren Windungen bildet die Rohrwand 15 des Hüllrohrs ein mehrschichtiges System aus.

Die aufrollbare Bahn 20 ist bei dem gezeigten Beispiel ihrerseits als mehrschichtiger Stapel gebildet. Im gezeigten Beispiel handelt es sich um einen Stapel aus einer ersten Materialschicht 21 und einer zweiten Materialschicht 22. Dabei ist die erste Materialschicht 21 gasundurchlässig ausgebildet und die zweite Materialschicht ist als gasdurchlässige, offene Struktur ausgebildet. Beim gezeigten Beispiel ist die erste Materialschicht eine 0,2 mm dicke Schicht aus einem glasfaserverstärkten Kunststoff (GFK). Dieses Material kann eine mittelmäßig hohe spezifische Wärmeleitfähigkeit, beispielsweise von etwa 0,6 W/(m-K) aufweisen. Die erste Materialschicht ist gasdicht ausgebildet, so dass also kein gasförmiges Kühlmittel in radialer Richtung r durch diese erste Schicht hindurchtreten kann.

Die zweite Materialschicht 22 ist dagegen als gasdurchlässige Schicht ausgebildet. Es handelt sich um eine offene Struktur mit einem relativ geringen Füllgrad an Material und einem entsprechend hohen Anteil an Hohlräumen. Beispielsweise kann es sich um ein Glasvlies handeln, durch welches ein Gas leicht hindurchtreten kann, welches aber durch seine feine Unterstruktur trotzdem gute thermische Isolationseigenschaften aufweist und Strömungen behindert. Innerhalb der zweiten Materialschicht können auch mehrere Lagen einer solchen Struktur vorgesehen sein, beispielsweise ein 8-lagiger Stapel aus solchen einzelnen Glasvlies-Schichten. Alternativ kann hier beispielsweise auch eine Superisolationsschicht (mit metallischen Zwischenschichten) zum Einsatz kommen, wenn die Anforderungen an die elektrische Durchschlagfestigkeit nicht allzu hoch sind.

Beim Beispiel der Figur 3 liegt im Bereich der radial äußersten und mit wo bezeichneten Windung die erste Materialschicht 21 (also hier die GFK-Schicht) außen. Auch im Bereich der radial innersten Windung wi ist die Oberfläche der Rohrwand durch die mechanisch stabilere erste Materialschicht 21 gegeben. Somit ist diese erste Materialschicht 21 um eine Windung länger als die zweite Materialschicht 22. Dies trägt zu einer erhöhten mechanischen Stabilität des gebildeten Hüllrohrs 13 bei. Im Bereich der jeweiligen Bahnkante 31 sind diese äußersten Windungen wi und wo (und insbesondere deren erste Materialschichten 21) mit den ersten Materialschichten der Nachbarwindung verklebt. Hierzu ist im Bereich der beiden Bahnkanten 31 ein Klebemittel 32 vorgesehen, welches die ersten Materialschichten 21 der beiden benachbarten Windungen miteinander verbindet. Dies verleiht der gesamten Rolle eine gewisse mechanische Stabilität gegenüber einem unerwünschten Abrollen. Weiterhin kann diese Klebeverbindung so ausgeführt sein, dass ein Eindringen von Gas in die zweite Materialschicht zumindest im Bereich der Bahnkanten 31 reduziert oder sogar vollständig vermieden wird.

Die übrigen Windungen des Hüllrohrs 13 sind beim Beispiel der Figur 3 nicht miteinander verklebt. Ihre mechanische Fixierung gegen ein Abrollen kann beispielsweise durch eine Fixierung im Bereich des mit dem Kryostatdeckel 5b verbundenen ersten Rohrendes 13a erreicht werden.

Durch die im Querschnitt spiralartige Ausgestaltung der Rollenwicklung wird in radialer Richtung r ein Gasstrom unterbunden, obwohl die zweite Materialschicht 22 an sich gasdurchlässig ist. Dies liegt an der massiven Verlängerung der Weglänge, welche ein Gasstrom durch die spiralförmig gewickelte zweite Materialschicht nehmen muss. Dadurch, dass durch die Feinstruktur innerhalb der zweiten Materialschicht (beispielsweise das Vlies oder das Netz oder der Schaum) die Konvektion des Gases innerhalb wirksam unterbunden ist, ist somit die thermische Leitfähigkeit der Rohrwand in radialer Richtung r wirksam reduziert. In ähnlicher Weise bewirkt die spiralartige Wegverlängerung, dass auch die thermische Leitfähigkeit der GFK-Schicht nicht zu einem zu hohen Wärmetransport zwischen dem Bereich innerhalb des Hüllrohrs und dem Bereich außerhalb des Hüllrohrs führt. Dies bewirkt insbesondere, dass der Wärmetransport in radialer Richtung r niedriger ist, als wenn das Hüllrohr mit vergleichbarer Wandstärke 35 als massives GFK-Rohr ausgebildet wäre. Die Dicke der aufrollbaren Bahn 20 und somit die Dicke einer einzelnen Windung w ist hier mit 37 bezeichnet. Diese Dicke kann beispielsweise im Bereich deutlich unterhalb von 2 mm liegen. Durch geeignete Wahl der Windungszahl kann damit die gewünschte Wandstärke 37 des Rohrs eingestellt werden. Der Innendurchmesser 39 des Rohrs ergibt sich aus den Abmessungen des Kaltkopfs und dem gewünschten Abstand zwischen Kaltkopf und Rohrwand.

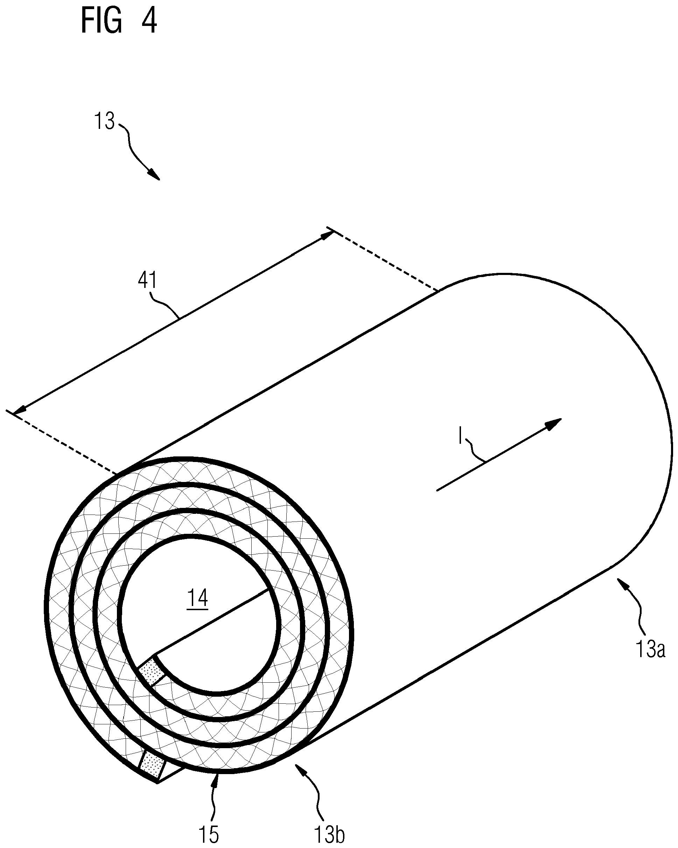

Figur 4 zeigt eine schematische perspektivische Darstellung des Hüllrohrs 13 der Figur 3. Gezeigt ist eine Aufsicht auf das zweite Rohrende 13b, welches im Badkryostaten der Figur 2 nach unten hängt. Dieses zweite Rohrende 13b ist offen ausgebildet. Einerseits lieg also der Rohrinnenraum 14 hier offen, so dass Gas in den Innenraum ein- und austreten kann. Andererseits liegt auch der Schichtstapel der Rohrwand 15 offen, so dass auch Gas von dieser Seite in die gasdurchlässige zweite Materialschicht 22 ein- und austreten kann. Diese offene Ausgestaltung führt dazu, dass bei einer eventuellen Evakuierung des Badkryostaten auch die Hohlräume der zweiten Materialschicht 22 schnell geleert werden können und es nicht zu einem unerwünschten verzögerten Ausgasen der Rohrwand 15 kommt. Geeignete Werte für die Länge 41 des Hüllrohrs 13 ergeben sich dabei vor allem aus der Höhe des Gasvolumens 7b im Badkryostaten und aus dem gewünschten Abstand d zwischen dem Hüllrohr 13 und dem maximalen Füllpegel 19.

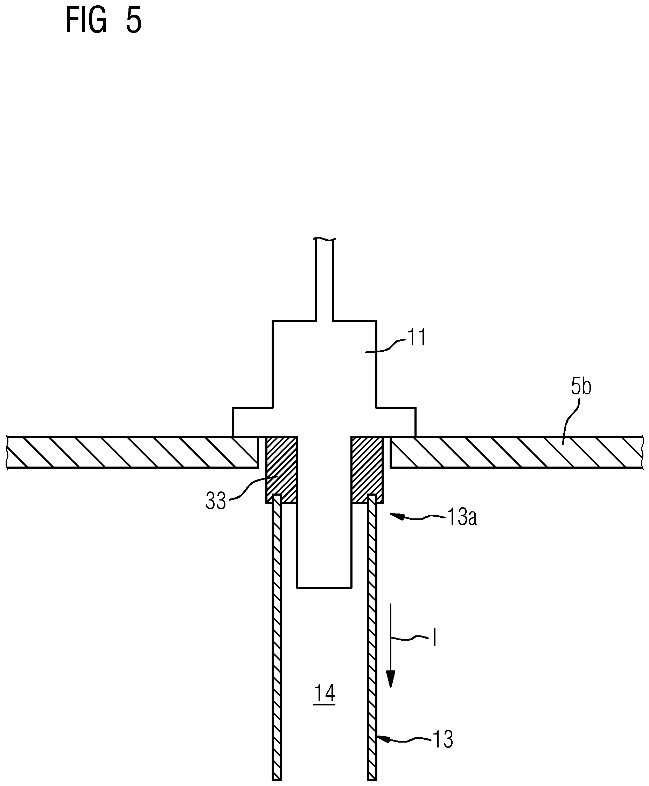

In Figur 5 ist eine Detailansicht des Badkryostaten der Figur 2 im Bereich des Kaltkopfes 11 gezeigt. Gezeigt ist also der Bereich des ersten Rohrendes 13a, in dem das Hüllrohr 13 den Kaltkopf 11 ringförmig umgibt. In diesem Bereich ist das Hüllrohr mittels der Dichtung 33 fest mit dem Kryostatdeckel verbunden. Diese Dichtung 33 kann beispielsweise wiederum als thermisch isolierendes Rohr ausgestaltet sein, welches mit dem Kryostatdeckel verklebt ist. Das erste Ende 13a des Hüllrohrs kann wiederum in diese Dichtung 33 eingeklebt sein. Beide Klebungen können beispielsweise mit einem Epoxidharz realisiert sein. Ein geeignetes Material für das Dichtungsrohr ist beispielsweise der Hartschaum Rohacell. Diese Art der Dichtung verhindert einerseits effektiv eine unerwünschte Gasströmung zwischen dem ersten Rohrende 13a und dem Kryostatdeckel 5b. Andererseits wird auch eine unerwünschte thermische Ankopplung zwischen diesen beiden Elementen wirksam reduziert. So kommen die Vorteile des Hüllrohrs 13 im Hinblick auf eine Reduzierung von Konvektionsströmungen besonders wirksam zum Tragen.

### Bezugszeichenliste

- 1: Badkryostat
- 3: supraleitende Einrichtung
- 5: Kryostatwand
- 5a: Kryostatbehälter
- 5b: Kryostatdeckel
- 7: Innenraum
- 7a: Flüssigkeitsvolumen
- 7b: Gasvolumen
- 9: kryogenes Kühlmittel
- 11: Kaltkopf
- 11a: Kondensorbereich
- 13: Hüllrohr
- 13a: erstes Rohrende
- 13b: zweites Rohrende
- 14: Rohrinnenraum
- 15: Rohrwand
- 17: Konvektionsströmung
- 18: Überdruckventil
- 19: Füllpegel
- 20: aufrollbare Bahn
- 21: erste Materialschicht
- 22: zweite Materialschicht
- 31: Bahnkante
- 32: Klebemittel
- 33: Dichtung
- 35: Wandstärke
- 37: Bahndicke
- 39: Innendurchmesser
- 41: Länge
- d: Abstand
- 1: Längsrichtung des Hüllrohrs
- r: radiale Richtung
- w: Windung
- wi: radial innenliegende Windung
- wo: radial außenliegende Windung

## Patentansprüche

1. Badkryostat (1), insbesondere zur Kühlung einer supraleitenden Einrichtung (3), mit einer thermisch isolierenden Kryostatwand (5), einen Innenraum (7) zur Befüllung mit einem kryogenen Kühlmittel (9),
- wenigstens einen im Bereich der Kryostatwand (5) angeordneten Kaltkopf (11) zur Kühlung des Innenraums (7) des Badkryostaten (1)
- sowie ein thermisch isolierendes, längliches Hüllrohr (13), welches den Kaltkopf (11) im Innenraum (7) des Badkryostaten (1) im Bereich eines ersten Rohrendes (13a) ringförmig umgibt,
- wobei das Hüllrohr (13) eine in radialer Richtung (5) gasdichte Rohrwand (15) aufweist.

2. Badkryostat (1) nach Anspruch 1, bei welchem die Rohrwand mehrschichtig ausgebildet ist.

3. Badkryostat (1) nach Anspruch 2, bei welchem die mehrschichtige Rohrwand (15) durch eine rollenartige Wicklung aus einer Mehrzahl n von radial übereinanderliegenden Windungen (w) einer aufrollbaren Bahn (20) gebildet ist.

4. Badkryostat (1) nach Anspruch 3, bei welchem die aufrollbare Bahn (20) als Stapel von wenigstens zwei unterschiedlichen Materialschichten (21,22) gebildet ist.

5. Badkryostat (1) nach Anspruche 4, bei welchem der Stapel wenigstens eine erste Materialschicht (21) aufweist, welche gasundurchlässig ist.

6. Badkryostat (1) nach Anspruch 5, bei welchem die erste Materialschicht (21) einen glasfaserverstärkten Kunststoff umfasst.

7. Badkryostat (1) nach einem der Ansprüche 4 bis 6, bei welchem der Stapel eine zweite Materialschicht (22) aufweist, welche gasdurchlässig ist.

8. Badkryostat (1) nach Anspruch 7, bei welchem die gasdurchlässige zweite Materialschicht (22) durch eine Vliesmatte, eine Netzmatte, eine Superisolationsfolie und/oder eine Schaumstoffmatte gegeben ist.

9. Badkryostat (1) nach einem der vorhergehenden Ansprüche, bei welchem das Hüllrohr (13) flexibel ausgebildet ist.

10. Badkryostat (1) nach einem der vorhergehenden Ansprüche, bei welchem das erste Rohrende (13a) des Hüllrohrs (13) mittels einer thermisch isolierenden und gasdichten Dichtung (33) fest mit der Kryostatwand (5) verbunden ist.

11. Badkryostat (1) nach einem der vorhergehenden Ansprüche, bei welchem die Kryostatwand (5) aus einem Kryostatbehälter (5a) und einem Kryostatdeckel (5b) zusammengesetzt ist,
- wobei der Kaltkopf (11) im Bereich des Kryostatdeckels (5b) angebracht ist.

12. Badkryostat (1) nach einem der vorhergehenden Ansprüche, bei welchem das Hüllrohr (13) von der Kryostatwand (5) geodätisch senkrecht nach unten hängt.

13. Badkryostat (1) nach Anspruch 12, welcher einen vorgegebenen maximalen Füllpegel (19) für das flüssige kryogene Kühlmittel (9) aufweist, wobei der Abstand (d) zwischen dem maximalen Füllpegel (19) und dem untenliegenden Rohrende (13b) 20 cm oder weniger beträgt.

14. Hüllrohr (13) zur Reduzierung von Konvektion (17) in einem Badkryostaten (1),
- wobei das Hüllrohr (13) als thermisch isolierendes, längliches Rohr ausgebildet ist, welches eine in radialer Richtung gasdichte, mehrschichtige Rohrwand (15) aufweist,
- wobei die mehrschichtige Rohrwand (15) durch eine rollenartige Wicklung aus einer Mehrzahl n von radial übereinanderliegenden Windungen (w) einer aufrollbaren Bahn (20) gebildet ist,
- wobei die aufrollbare Bahn (20) als Stapel von wenigstens zwei unterschiedlichen Materialschichten (21,22) gebildet ist,
- wobei der Stapel wenigstens eine erste Materialschicht (21) aufweist, welche gasundurchlässig ist,
- und wobei die erste Materialschicht (21) einen glasfaserverstärkten Kunststoff umfasst.

15. Verfahren zur Herstellung eines Hüllrohrs (13) nach Anspruch 14, wobei das Hüllrohr (13) durch Aufrollen der aufrollbaren Bahn (20) zu einer rollenartigen Wicklung aus einer Mehrzahl n von radial übereinanderliegenden Windungen (w) gebildet wird.
